# EUROPEAN PATENT APPLICATION

(11) **EP 1 138 191 A2**
(43) Date of publication of application: **04.10.2001**
(21) Application number: 01302645.5
(22) Date of filing: 22.03.2001
(51) Int. Cl.: A01G 9/02

(54) **Improvements to plant pots and their liners**

(30) Priority: 22.03.2000 GB 0006756; 20.12.2000 GB 0030990
(71) Applicant: Strand, Anthony, Buckinghamshire HP16 0QY (GB)
(72) Inventor: Strand, Anthony, Buckinghamshire HP16 0QY (GB)
(74) Representative: Whitaker, Iain Mark

(57) **Abstract**

A liner (1) for plant pots (2) to enhance water retention properties of the plant pots (2) and which comprises an absorbent water retentive material that is shaped or conformable to the shape of the interior of a plant pot (2) to serve as a pot within a pot and capable of independently maintaining that shape.

## Description

### Field of the Invention

The present invention concerns improvements in and relating to liners for plant pots for enhanced water retention.

### Background to the Invention

Conventionally plant pots are constructed generally of plastics moulding or of clay and provided with drainage vents at their base to allow excess water to drain through and prevent water logging. This basic arrangement although broadly acceptable is unsophisticated and does not provide the user with any means for compensating for fast draining or slow draining soils or infrequent bouts of watering.

In recent years materials have been developed for lining plant pots to improve their water retention characteristics. In general, these make use of vermiculite or similar materials in granular form and which are spread around the base of the pot and around the root ball and soil of the plant that is installed into the pot.

Although the use of such lining material enhances water retention it is very difficult to use the material in a consistent manner other than as a base lining for the pot and the water retentiveness will correspondingly be very variable.

Less of a problem is faced if the lining material is a sheet of composite foil material of wool felt bonded to polyethylene foil as described in DE 29 900 940 U1 but this is a water barrier and therefore, makes the plant container vulnerable to water logging. It is not of defined form relative to a plant pot or other container, does not ensure consistent distribution of water retention and does not ensure optimal root development.

Also in the prior art, US5,983,566 describes a specialised plant pot for transplantation comprising a plant pot with a thin walled inner pot of decomposable material that is not a pot liner. The inner pot is of constricted volume having inwardly sloping walls to create a large tapered cavity between it and the outer pot to facilitate transplantation.

Other proposals for containers for plant propagation include folded woven fabric root ball containers such as illustrated in GB 1,186,730. These are not adapted for use as plant pot liners but represent a more rigid alternative to the conventional loose woven sock used to hold together a plant root ball - used extensively for larger perennials, shrubs and young trees.

It is a general object of the present invention to provide an improved liner system for plant pots that has consistent water retention characteristics and which is simple to use. Further objects of the invention are to provide such a plant pot liner which is cheap and simple to manufacture and ecologically acceptable, being biodegradable.

### Summary of the Invention

According to a first aspect of the present invention there is provided a plant pot having closely accommodated therein a liner to enhance water retention properties of the plant pot and which comprises an absorbent water retentive material that is shaped to closely fit to the shape of the interior of the plant pot to serve as a pot within a pot and capable of independently maintaining that shape.

The liner of the present invention is suitably formed of a textile material and is suitably initially in a flat form that may be folded out/extended into the pot liner shape. Alternatively, it may be manufactured/moulded to have the required pot liner shape.

Currently preferred materials include re-cycled paper compressed in papier mache format and preferably having a minimum wall thickness of 2.5mm, 3mm to 7mm being preferred Cotton wool is a particularly preferred material that may be used. Further and more sophisticated materials that may be used include other absorbent padding type materials as used in a variety of different disposable nappies and sanitary napkins and the like.

Significant benefits provided by the invention include the fact that the water retention properties of the lining can be consistently maintained at a pre-determined level that may be relatively high, depending upon the needs of the plant, pot and user. Furthermore, since the liner has a defined pot shape substantially filling the pot so that there is no gap between the liner and the pot it will retain the moisture at the extremities of the interior of the pot and induce maximal route growth around the entire perimeter of the pot rather than simply to the base of the pot or in isolated areas.

By appropriate selection of materials and method of assembly, including or excluding any gaps or other vents, differing amounts of water may be retained to suit specific requirements.

The present invention not only provides a novel product comprising the combination of a plant pot and plant pot liner but also provides a novel wall mountable plant pot that has a novel means for mounting to a wall. The improved plant pot has a rim that is extended radially outwardly as a flange around the whole of or the majority of the circumference of the pot. This extended rim has a plurality of apertures therethrough through which the trailing stems of a plant may be passed. The pot is suitably further adapted so that the apertures can serve as a means for mounting the wall mounting pot to a wall by fitment to a wall mounting bracket that has lug means to cooperatively engage with one or more of the apertures in the extended rim.

The plant pot itself is suitably formed of a material whereby it is collapsible when empty. This suitably comprises one or more sheets of water impermeable material. Such a plant pot is suitably biodegradable and may be formed of a sheet of a non-woven fabric such as polypropylene.

According to a further aspect of the present invention there is provided a plant pot with a liner to enhance water retention properties of the plant pot and which liner comprises an absorbent water retentive material that sits within the pot as a pot within a pot and is capable of independently maintaining that shape and where the plant pot itself is formed of one or more sheets of water-impermeable material whereby it is flexible/collapsible when empty for storage in a flattened form.

### Brief Description of the Drawing

A preferred embodiment of the present invention will now be more particularly described by way of example, with reference to the accompanying drawing, wherein:
Figure 1 is a perspective view of a preferred embodiment of liner and of a plant pot and plant to be assembled together.
Figures 2A-2B are perspective views from the front and above and from the rear and below of wall mountable plant pots;
Figures 3A-3B are a pot plan view and side elevation view, respectively, of a variant of the wall mountable plant pot; and
Figures 4A-4C are, respectively, a side elevation view, front elevation view and front plan view of a wall mount for mounting a wall mountable pot of the type illustrated in Figures 3A-3B.

### Description of the Preferred Embodiment

In the embodiment of the invention as illustrated the plant pot liner 1 is formed of compressed cotton wool or another absorbent material. The shape of the liner 1 has the shape of a plant pot 2 within which the liner 1 is intended to be seated.

The liner 1 is suitably cut from a sheet of compressed cotton wool or other such absorbent material following a pattern and then stitched together into the required shape - generally tubular, having a substantially circular cylindrical or somewhat frustoconical side wall and with a circular base wall at one end.

The thickness of the absorbent sheet that forms the liner 1 and hence the thickness of the wall and base of the liner 1 is preferably of the order of 2.5 mm or greater indeed the preferred thickness is between 3mm and 7mm. However the thickness will be dependent upon the size of the pot, retentiveness of the material and the water retention requirements.

The material selected is absorbent and retentive of water although it need not necessarily be fast absorbing. It is suitably biodegradable.

In the illustrated embodiment of using cotton wool sheets the method of assembly involves a stitching or similar process akin to dress making and leads to a product that is flexible and may be squashed or folded into a substantially flat pack form.

Conversely, the liner 1 may be pre-formed during manufacture to the required shape and could be substantially rigid. A liner 1 of paper-based material could be used and with the required shape pressed or otherwise moulded from the material.

Where textile fabrics or card or other such material are used the end user of the product has the ability to customise the product to his requirements by self assembly or by adapting with scissors or other implements to provide additional vent holes for drainage, for example.

The pot liner and pot combination of the present invention is particularly effective and efficient when the plant pot is a wall mounting plant pot. Wall mounting plant pots are amongst the most vulnerable to soil desiccation. The pot liner 1 mitigates against this increased risk of desiccation in wall mounted pots.

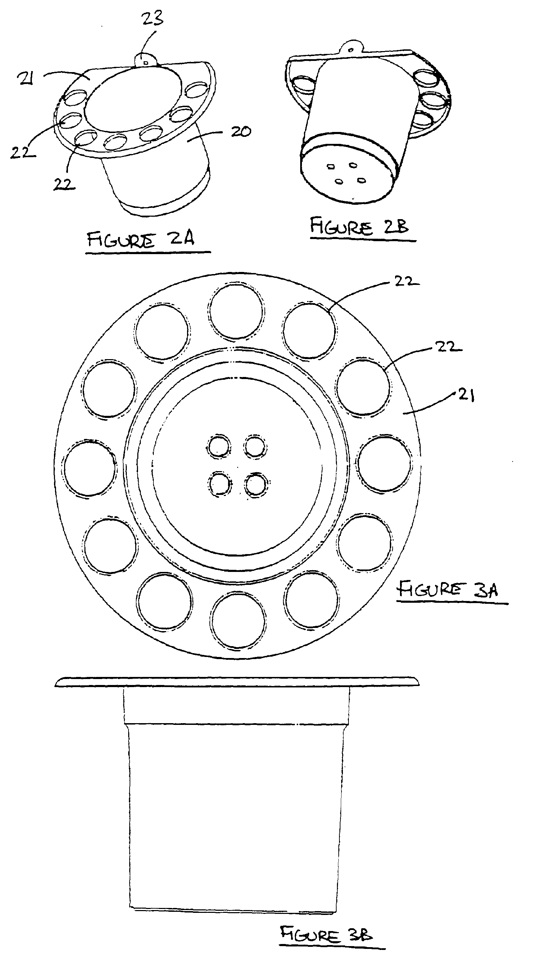

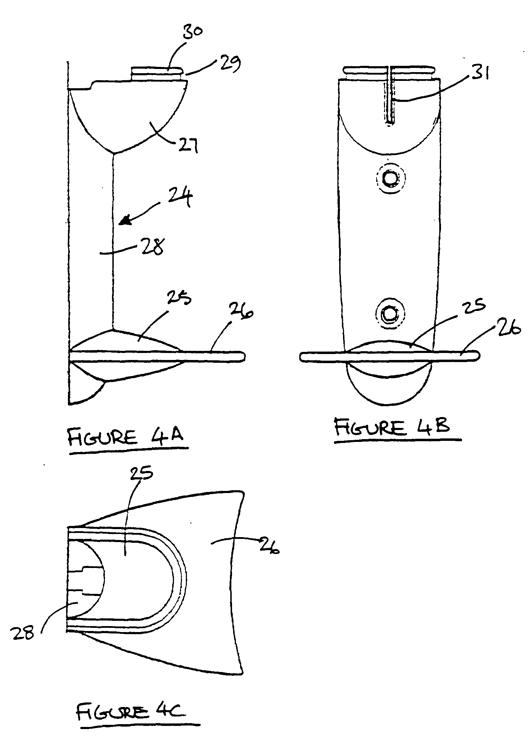

Exemplary designs of pot that are particularly well suited for wall mounting are illustrated in Figures 2A-B and 3A-B. Here the pots 20 are each specially adapted for wall mounting. The pot 20 illustrated in Figures 2A-B has an apertured flange 23 projecting from its upper rim and through which a screw or nail or other fixing means may be projected to secure the pot 20 to a wall. The pot 20 is further distinguished from conventional pot design by having a broad rim extension extending radially outwardly around the majority of its circumference. This rim extension 21 is perforated with a plurality of large apertures 22 at regularly spaced intervals there around. These apertures 22 may be multipurpose. A prime role of the apertures 22 is to provide a means for tidying any trailing growth from the plant that is held in the plant pot 20. By organising the various stems of the plant to extend through different apertures 22 that plant is not only made more presentable but also growth will be more even and ultimately it will be more healthy, with all of the stems being given appropriate access to space, air and light.

A further function of the apertures 22 is to serve as an alternative means for mounting of the wall mountable pot 20 to a wall - by using a dedicated wall mounting bracket 24.

Turning to Figures 3A-B and 4A-C, a wall mountable pot 20 having an extended rim 21, which in this case is around the full circumference of the pot 20, can be easily mounted to a wall by using any of the apertures 22 as a socket for a lug of the bracket 24. As will be seen, the bracket 24 , suitably a plastics moulding, has a stem 28 that is suitably substantially vertical in use and secured by screws or other suitable fixings to a wall. At the upper end of the stem 28 is an upper boss 27 and at the lower end is a lower boss 25. The upper boss 27 has a snap fit lug 29 that is adapted to snap fit into an aperture of a wall mountable pot 20. The lug 29 and upper boss 27 are provided with a slit 31 to allow the lug 29 to resiliently compress for snap fit insertion into an aperture 22. An upper rim 30 of the lug 29 grips the upper face of the rim 21 of the plant pot 20 once the lug 29 has been inserted through the aperture 22.

The lower boss 25 of the wall mounting bracket 24 serves to space the bottom end of the plant pot 20 away from the wall by means of a fin 26 that projects substantially perpendicularly therefrom.

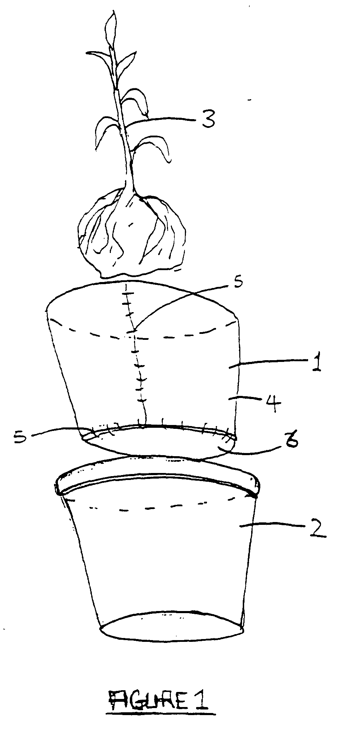

Although the illustrated embodiment shows a substantially conventional plant pot, being a plastics moulding mould-formed to the required shape, in a further aspect of the invention this plant pot may be assembled from sheets of fabric such as, for example, polypropylene, and therefore be readily collapsible when emptied of soil. The plant pot may have substantially the same form as the liner 1 shown in figure 1 but differ from it in being of an inherently water impermeable material. This plant pot is suitably also biodegradable and suitably somewhat more rigid than the liner. The pot could be of any suitable shape, being square or polygonal in plan view, and need not simply be round.

A plant pot and liner combination of this type can provide major economies of cost and material for commercial growers and garden centres. The collapsible pot concept enables storage and facilitates re-use. A plant can be grown inside the liner-lined collapsible pot at a garden centre and sold with or without the pot. When sold with the collapsible pot, this may be disposed of by the user and the plant transplanted in its liner or preferably the collapsible pot may be hung up with the liner and plant contained within it.

## Claims

1. A plant pot having closely accommodated therein a liner to enhance water retention properties of the plant pot and which comprises an absorbent water retentive material **characterised in that** the liner is shaped to closely fit to the shape of the interior of the plant pot to serve as a pot within a pot and capable of independently maintaining that shape.

2. A plant pot with liner as claimed in claim 1, wherein the liner is formed of a textile material and is initially in a flat form that may be folded out/extended into the pot liner shape.

3. A plant pot with liner as claimed in claim 1 or claim 2, wherein the liner is formed of re-cycled paper compressed in papier mache format or is formed from compressed cotton wool.

4. A plant pot with liner as claimed in any preceding claim, wherein the liner has a minimum wall thickness of the order of 2.5mm.

5. A plant pot with liner as claimed in claim 1 wherein the liner is formed of cotton wool.

6. A plant pot with liner as claimed in any preceding claim and that is biodegradable.

7. A plant pot that is wall mountable and which comprises a radially extended rim having a plurality of apertures therethrough through each of which apertures part of the stem of the plant may be passed.

8. A plant pot as claimed in claim 7, wherein the plant pot is provided in combination with a wall mounting bracket that has a lug means thereon which cooperatively engages in use with one or more of the apertures of the rim of the plant pot.

9. A plant pot as claimed in claim 8 and wherein the bracket has the lug mounted on an upper portion and has a stem with a lower portion at the lower, in use, end of the stem having a spacer means projected therefrom to space the lower, in use, end of the pot away from the wall to which the pot is mounted by the bracket.

10. A plant pot as claimed in claim 7 in combination with a pot liner as claimed in any of claims 1 to 7.

11. A plant pot with liner as claimed in any of claims 1 to 6 and 10, wherein the plant pot itself is formed of one or more sheets of water impermeable material whereby it is collapsible when empty.

12. A plant pot with liner as claimed in claim 11 wherein the plant pot is biodegradable.

13. A plant pot with liner as claimed in claim 12 wherein the plant pot is formed of a sheet of a non-woven fabric such as polypropylene.

14. A plant pot with a liner to enhance water retention properties of the plant pot and which liner comprises an absorbent water retentive material that sits within the pot as a pot within a pot and is capable of independently maintaining that shape and wherein the plant pot itself is formed of one or more sheets of water-impermeable material whereby it is collapsible when empty for storage in a flattened form.
